# EUROPEAN PATENT SPECIFICATION

(11) **EP 1 258 641 B1**
(45) Date of publication and mention of the grant of the patent: **17.08.2005**
(21) Application number: 02011044.1
(22) Date of filing: 17.05.2002
(51) Int. Cl.: F16B 37/14, B25B 9/02

(54) **Cover for a threaded connecting member**
Abdeckkappe für ein Schraubverbindungselement
Capuchon pour élément fileté

(30) Priority: 18.05.2001 IT TO20010468
(43) Date of publication of application: 20.11.2002
(73) Proprietor: Ruspa Officine S.P.A., 10070 Robassomero (IT)
(72) Inventor: Ruspa, Renzo, 10121 Torino (IT)
(74) Representative: Cerbaro, Elena

(56) References cited:
- FR-A- 2 059 410
- FR-A- 2 622 825
- FR-A- 2 625 127
- GB-A- 2 157 223
- US-A- 2 819 642
- US-A- 3 548 704
- US-A- 5 810 532
- PATENT ABSTRACTS OF JAPAN vol. 1996, no. 07, 31 July 1996 (1996-07-31) & JP 08 068415 A (OKABE CO LTD), 12 March 1996 (1996-03-12)

## Description

The present invention relates to a cover for a threaded connecting member.

Covers for threaded connecting members are known comprising a cup-shaped body defining an inner cavity for housing a threaded connecting member or an end portion of it.

The threaded connecting member may convenient ly comprise a screw for fastening a vehicle (in particular, industrial vehicle) wheel; in which case, the cavity houses the polygonal (e.g. hexagonal) head of the screw projecting outwards of the vehicle wheel.

The threaded connecting member may also comprise a polygonal (e.g. hexagonal) nut for fastening parts in general, e.g. for connecting metal trestle elements.

The cup-shaped body protects the thread of the threaded connecting member against potentially harmful external elements (water, oil, fuel, dust, etc.) to prevent damage to the thread and also enable smooth assembly/disassembly of the threaded connecting member itself.

The cup-shaped body may also perform an aesthetic function by covering the outward-facing portion of the threaded connecting member, e.g. the heads of screws used to fasten industrial vehicle wheels; in which case, the cup-shaped body is surface-treated (e.g. chromium-plated) to enhance its appearance.

Known covers fail to provide for firm connection of the cup-shaped body to the threaded connecting member, so that any vibration to which the threaded connecting member is subjected (e.g. in automotive applications as described above) may result in the cup-shaped body detaching from the threaded connecting member.

It is an object of the present invention to provide a cover designed to eliminate the drawbacks of known covers by ensuring firm connection of the cup-shaped body to the threaded connecting member. Patents FR-2.059.410, US 3.548.704 and US-2.819.642 describe a cover for threaded connecting member as set in the preamble of claim 1.

According to the present invention, there is provided a cover for a threaded connecting member, comprising a cup-shaped body defining an inner cavity coaxial with an axis and for housing at least an end portion of the threaded connecting member; said cover comprising a number of elongated elastic appendixes integral with the cup-shaped body, extending in directions substantially parallel to the axis, and for exerting radial pressure on at least said portion to establish firm connection of the cup-shaped body to the threaded connecting member characterized in that the cover comprises a retaining ring fitted to the end portions of said elongated elastic appendixes to exert radial pressure on said appendixes and flex the appendixes towards said axis.

A preferred, non-limiting embodiment of the invention will be described by way of example with reference to the accompanying drawings, in which:
Figure 1 shows a view in perspective of a cover for a threaded connecting member in accordance with the teachings of the present invention;
Figure 2 shows a longitudinal section of the Figure 1 cover;
Figure 3 shows an underside view of the Figure 1 cover.

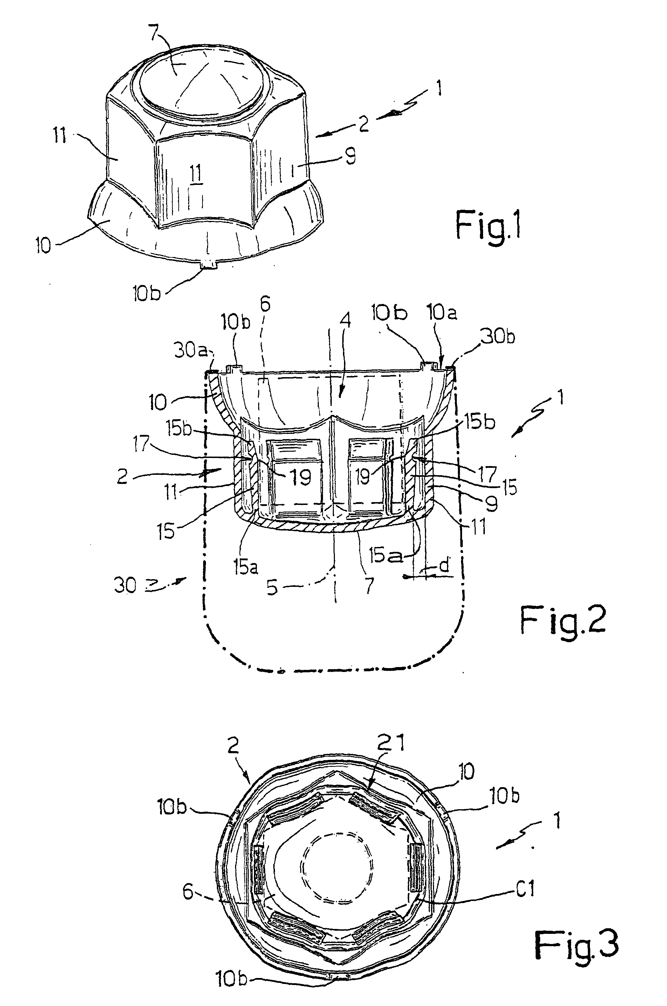

Number 1 in Figure 1 indicates as a whole a cover for a threaded connecting member, in particular a polygonal, e.g. hexagonal, threaded connecting member.

Cover 1 comprises a cup-shaped body 2 defining an inner cavity 4 (Figure 2) coaxial with an axis 5 and hexagonal in section crosswise to axis 5. As explained later on, cavity 4 provides for housing an end portion of the threaded connecting member - in the example shown, a hexagonal nut 6 (shown by the dash lines in Figures 2 and 3). Cavity 4, however, may obviously also house a different end portion of a threaded connecting member, such as a hexagonal screw head (not shown).

Cup-shaped body 2 is molded in one piece from plastic material, and comprises a dome-shaped base portion 7; a tubular portion 9 extending integrally from base portion 7 and coaxial with axis 5; and a flared annular end portion 10 extending outwards of cup-shaped body 2 from an edge of tubular portion 9. Annular portion 10 has a circular free edge 10a from which extends a number of small, angularly equally spaced, rectangular appendixes 10b.

Cup-shaped body 2 may be surface-treated (e.g. chromium-plated) to make its outward-facing surfaces reflecting.

Tubular portion 9 has a hexagonal cross section, and comprises six rectangular walls 11 integral with one another and with base portion 7. The surfaces of walls 11 facing inwards of the cup-shaped body define cavity 4.

The cup-shaped body comprises a number of elastic appendixes 15 integral wi th cup-shaped body 2, extending in directions substantially parallel to axis 5, and for exerting radial pressure on nut 6 to establish firm connection of cup-shaped body 2 to threaded connecting member 6.

More specifically, each appendix 15 is substantially straight, and comprises a rectangular wall extending parallel to and a predetermined distance d from a re spective wall 11.

Each appendix 15 has a first end 15a integral with base portion 7; and a contoured free second end 15b. More specifically, the contoured end 15b defines a roughly U-shaped groove 17 on the side facing wall 11, and comprises, on the side facing cavity 4, a wide portion 19 extending towards axis 5.

Appendixes 15 are arranged along a hexagonal path C₁ (Figure 3).

According to the present invention, a retaining ring 21 (shown in Figure 3 but not in Figure 2 for the sake of simplicity) is fitted to the end portions of elastic appendixes 15. More specifically, ring 21 engages grooves 17, so as to be carried stably by appendixes 15, while at the same time exerting radial pressure on the appendixes to flex them slightly towards axis 5.

In actual use, cover 1 is fitted on to threaded connecting member 6 by the user gripping cup-shaped body 2 and pushing it on to threaded connecting member 6 so that threaded connecting member 6 (in the example shown, the nut) engages cavity 4, and elastic appendixes 15 are positioned contacting the lateral walls of threaded connecting member 6. More specifically, the axial movement of cup-shaped body 2 with respect to threaded connecting member 6 flexes appendixes 15 slightly towards tubular portion 9, and increases the tension exerted by retaining ring 21. The movement of cup-shaped body 2 terminates as base portion 7 comes to rest against an end portion of threaded connecting member 6 (in the example shown, a flat end portion of the nut) ; in which position, elastic appendixes 15 exert considerable radial pressure on the flat walls of hexagonal nut 6, by virtue of the combined action of retaining ring 21 and springback of appendixes 15 .

Cover 1 is conveniently detached from threaded connecting member 6 using a tool 30 (Figure 2) defined by a U-shaped elastic metal blade having facing end portions 30a, 30b.

End portions 30a, 30b are conveniently positioned on free circular edge 10a, and the U-shaped blade is gripped and compressed so that tool 30 engages cup-shaped body 2; tool 30 is then pulled parallel to axis 5 and away from threaded connecting member 6 to withdraw nut 6 from cavity 4.

As will be clear from the foregoing description, cover 1 therefore provides for eliminating the drawbacks of known covers, by the radial pressure exerted by elastic appendixes 15 ensuring stable connection of cup-shaped body 2 to threaded connecting member 6.

Clearly, changes may be made to the cover as described herein without, however, departing from the scope of the present invention.

## Claims

1. A cover for a threaded connecting member, comprising a cup-shaped body (2) defining an inner cavity (4) coaxial with an axis (5) and for housing at least an end portion of the threaded connecting member; said cover comprising a number of elongated elastic appendixes (15) integral with the cup-shaped body (2), extending in directions substantially parallel to the axis (5), and for exerting radial pressure on at least said portion to establish firm connection of the cup-shaped body (2) to the threaded connecting member (6)
**characterized by** comprising a retaining ring (21) fitted to the end portions of said elongated elastic appendixes (15) to exert radial pressure on said appendixes and flex the appendixes towards said axis (5).

2. A cover as claimed in Claim 1, wherein each elongated elastic appendix (15) comprises a depressed portion (17) located at an end portion of the appendix (15) and facing said cup-shaped body (2); said retaining ring (21) engaging the depressed portions (17) of said elongated elastic appendixes (15).

3. A cover as claimed in claim 1 or 2, wherein each elongated elastic appendix (15) comprises, on the side facing said cavity (4), a wide portion (19) extending towards said axis (5).

4. A cover as claimed in any one of the foregoing Claims, wherein said cup-shaped body comprises a dome-shaped base portion (7); a tubular portion (9) extending integrally from the base portion (7) and coaxial with said axis (5); and a flared annular end portion (10) extending outwards of the cup-shaped body (2) from an edge of the tubular portion (9).

5. A cover as claimed in Claim 4, wherein said annular end portion (10) has a free circular edge (10a) from which extend a number of spaced appendixes (10b).

## Patentansprüche

1. Abdeckkappe für ein Schraubverbindungselement, mit einem napfartigen Körper (2), welcher eine innere, koaxial zu einer Achse (5) angeordnete Hohlkammer (4) definiert, um wenigstens ein Endstück des Schraubverbindungselementes aufzunehmen, wobei die Abdeckkappe mehrere integral mit dem napfartigen Körper (2) ausgebildete sowie längs erstreckte elastische Fortsätze (15) aufweist, die sich im Wesentlichen parallel zur Achse (5) erstrecken und welche einen radialen Druck wenigstens auf das Endstück ausüben, um eine innige Verbindung des napfartigen Körpers (2) mit dem Schraubverbindungselement zu bewirken, **dadurch gekennzeichnet, dass** ein an die Endbereiche der längs erstreckten elastischen Fortsätze (15) angepasster Rückhaltering (21) vorgesehen ist, um einen radialen Druck auf die Fortsätze (15) auszuüben und die Fortsätze (15) in Richtung auf die Achse (5) vorzuspannen.

2. Abdeckkappe nach Anspruch 1, **dadurch gekennzeichnet, dass** jeder längs erstreckte elastische Fortsatz (15) in seinem Endbereich eine Einbuchtung (17) aufweist, welche dem napfartigen Körper (2) zugewandt ist, wobei der Rückhaltering (21) in die Einbuchtungen (17) der längs erstreckten elastischen Fortsätze (15) eingreift.

3. Abdeckkappe nach Anspruch 1 oder 2, **dadurch gekennzeichnet, dass** jeder längs erstreckte elastische Fortsatz (15) auf seiner der Hohlkammer (4) zugewandeten Seite einen sich öffnenden Bereich (19) gegenüber der Achse (5) aufweist.

4. Abdeckkappe nach einem der vorhergehenden Ansprüche, **dadurch gekennzeichnet, dass** der napfartige Körper (2) eine domartige Basis (7), einen sich integral von der Basis (7) erstreckenden sowie koaxial zur Achse (5) angeordneten zylindrischen Bereich (9) und ein ringförmig auskragendes Endstück (10) aufweist, welches sich ausgehend von einer Kante des zylinderförmigen Bereichs (9) nach außen im Vergleich zum napfartigen Körper (2) erstreckt.

5. Schutzabdeckung nach Anspruch 1, **dadurch gekennzeichnet, dass** das ringförmige Endstück (10) eine freie Kreiskante (10a) aufweist, von welcher sich eine Anzahl an beabstandeten Fortsätzen (10b) erstreckt.

## Revendications

1. Capuchon pour élément de connexion fileté, comprenant un corps en forme de coupe (2) définissant une cavité interne (4) coaxiale par rapport à un axe (5) et pour accueillir au moins une partie d'extrémité de l'élément de connexion fileté ; ledit capuchon comprenant plusieurs appendices élastiques allongés (15) faisant partie intégrante du corps en forme de coupe (2), s'étendant dans des directions sensiblement parallèles à l'axe (5), et pour exercer une pression radiale sur au moins ladite partie pour établir une connexion ferme du corps en forme de coupe (2) vers l'élément de connexion fileté (6),
**caractérisé en ce qu'**il comprend une bague de retenue (21) placée aux parties d'extrémité desdits appendices élastiques allongés (15) pour exercer une pression radiale sur lesdits appendices et fléchir les appendices vers ledit axe (5).

2. Capuchon selon la revendication 1, dans lequel chaque appendice élastique allongé (15) comprend une partie enfoncée (17) située au niveau d'une partie d'extrémité de l'appendice (15) et faisant face audit corps en forme de coupe (2) ; ladite bague de retenue (21) venant en prise avec lesdites parties enfoncées (17) desdits appendices élastiques allongés (15).

3. Capuchon selon la revendication 1 ou 2, dans lequel chaque partie d'extrémité de l'appendice (15) comprend, sur le côté faisant face à ladite cavité (4), une large partie (19) s'étendant vers ledit axe (5).

4. Capuchon selon l'une quelconque des revendications précédentes, dans lequel ledit corps en forme de coupe comprend une partie de base en forme de dôme (7) ; une partie tubulaire (9) s'étendant intégralement depuis la partie de base (7) et coaxiale par rapport audit axe (5) ; et une partie d' extrémité annulaire évasée (10) s'étendant vers l'extérieur du corps en forme de coupe (2) depuis un bord de la partie tubulaire (9).

5. Capuchon selon la revendication 4, dans lequel ladite partie d'extrémité annulaire évasée (10) a un bord circulaire libre (10a) duquel s'étendent plusieurs appendices espacés (10b).
